(19) Europäisches Patentamt
European Patent Office
Office européen des brevets

(11) **EP 2 294 732 B1**

(12) **EUROPÄISCHE PATENTSCHRIFT**

(45) Veröffentlichungstag und Bekanntmachung des Hinweises auf die Patenterteilung:
**13.05.2015 Patentblatt 2015/20**

(21) Anmeldenummer: **09772107.0**

(22) Anmeldetag: **23.06.2009**

(51) Int Cl.:
***H04H 20/67*** (2008.01)

(86) Internationale Anmeldenummer:
**PCT/EP2009/004508**

(87) Internationale Veröffentlichungsnummer:
**WO 2010/000407 (07.01.2010 Gazette 2010/01)**

(54) **VERFAHREN UND SYSTEM ZUR ZEITSYNCHRONISIERUNG ZWISCHEN EINER ZENTRALE UND MEHREREN SENDERN INSBESONDERE IN EINEM GLEICHWELLENNETZ**

METHOD AND SYSTEM FOR THE SYNCHRONISATION OF A CENTRAL STATION AND SEVERAL TRANSMITTERS, IN PARTICULAR IN A SINGLE-FREQUENCY NETWORK

PROCÉDÉ ET SYSTÈME DE SYNCHRONISATION TEMPORELLE ENTRE UNE TÊTE DE RÉSEAU ET PLUSIEURS ÉMETTEURS EN PARTICULIER DANS UN RÉSEAU EN ONDE COMMUNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.07.2008 DE 102008031796**
**11.11.2008 DE 102008056703**

(43) Veröffentlichungstag der Anmeldung:
**16.03.2011 Patentblatt 2011/11**

(73) Patentinhaber: **Rohde & Schwarz GmbH & Co. KG**
**81671 München (DE)**

(72) Erfinder:
• **HERZOG, Norman**
**10179 Berlin (DE)**
• **ZUREK-TERHARDT, Günther**
**15566 Schöneiche (DE)**

(74) Vertreter: **Körfer, Thomas**
**Mitscherlich PartmbB**
**Patent- und Rechtsanwälte**
**Sonnenstrasse 33**
**80331 München (DE)**

(56) Entgegenhaltungen:
**WO-A1-2006/046107**

**Beschreibung**

Die Erfindung betrifft ein Verfahren und ein System zur Zeitsynchronisierung zwischen einer Zentrale und mehreren Sendern insbesondere in einem Gleichwellennetz.

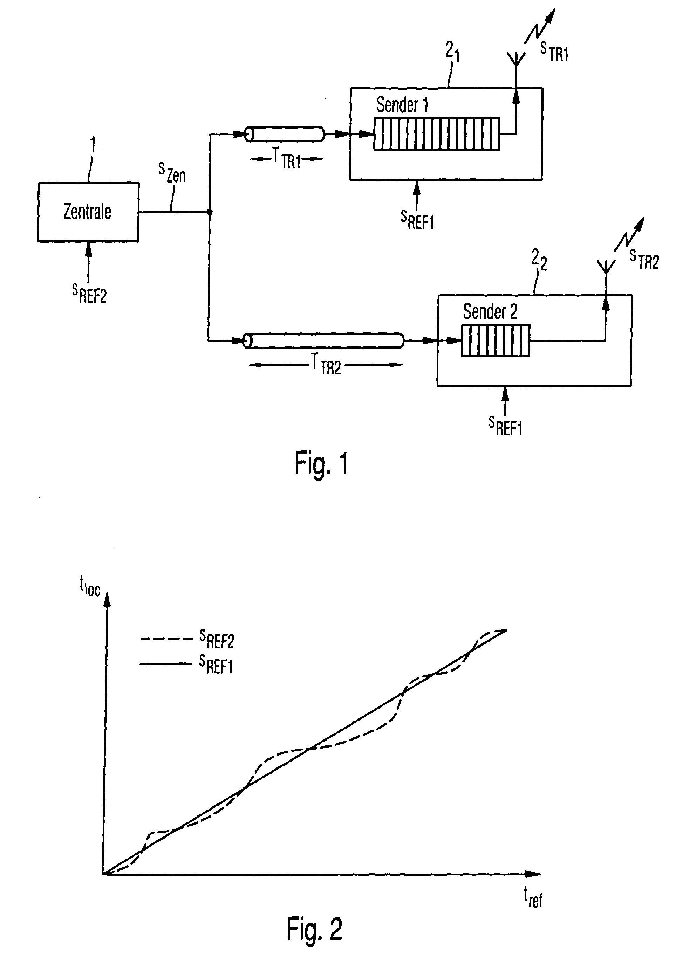

In einem Gleichwellennetz werden entsprechend Fig. 1 - für den Betriebsfall von zwei Sendern $2_1$ und $2_2$ - von einer Zentrale 1 - auch Headend genannt - die zu übertragenden Informationen typischerweise MPEG-2-kodiert in einzelnen Datenpaketen eines Transportdatenstroms $s_{Zen}$ gebündelt und über ein Netzwerk den einzelnen örtlich verteilten Sendern $2_1, 2_2,..., 2_i$ des Gleichwellennetzes zugeführt. Die Ausstrahlung des Transportdatenstroms $s_{TR1}, s_{TR2}...., s_{TRi}$ durch die einzelnen Sender $2_1, 2_2,...,2_i$ eines Gleichwellennetzes erfolgt sowohl frequenz- als auch zeitsynchronisiert.

Die im Folgenden zu betrachtende Zeitsynchronisierung berücksichtigt insbesondere unterschiedliche Laufzeiten $t_{TR1}, t_{TR2},..., t_{TRi}$ des Transportdatenstroms $s_{Zen}$ zwischen der Zentrale 1 und den einzelnen Sendern $2_1, {}_2 2,..., 2_i$. In der WO 2006/046107 A1 wird ein System und ein Verfahren zur Zeitsynchronisierung eines Transportdatenstroms in einem Gleichwellennetz vorgestellt, bei der die Synchronisierung zwischen den einzelnen Sendern über in den Transportdatenstrom in konstanten Zeitintervallen von der Zentrale eingefügte Zeitinformationen erfolgt, die den Sendezeitpunkt $t_{Sende_1} -t_{Sende_2} =...= t_{Sende_i}$ des die Zeitinformation tragenden Datenpakets des auszustrahlenden Transportdatenstroms $s_{TR1}, s_{TR2},..., s_{TRi}$ bei allen Sendern $2_1, 2_2, ..., 2_i$ beinhalten. Anhand dieser Zeitinformation kann der einzelne Sender kontinuierlich im Zeitraster der übertragenen Zeitinformationen die einzelnen empfangenen Datenpakete des Transportdatenstroms $s_{TR1}, s_{TR2}...., s_{TRi}$ durch Zwischenspeichern in einem Pufferspeicher $3_1, 3_2,..., 3_i$ soweit zeitlich verschieben, bis jedes einzelne Datenpaket zu seinem korrekten Sendezeitpunkt $t_{Sende_1} = t_{Sende_2} =... = t_{Sende_i}$ ausgestrahlt werden kann.

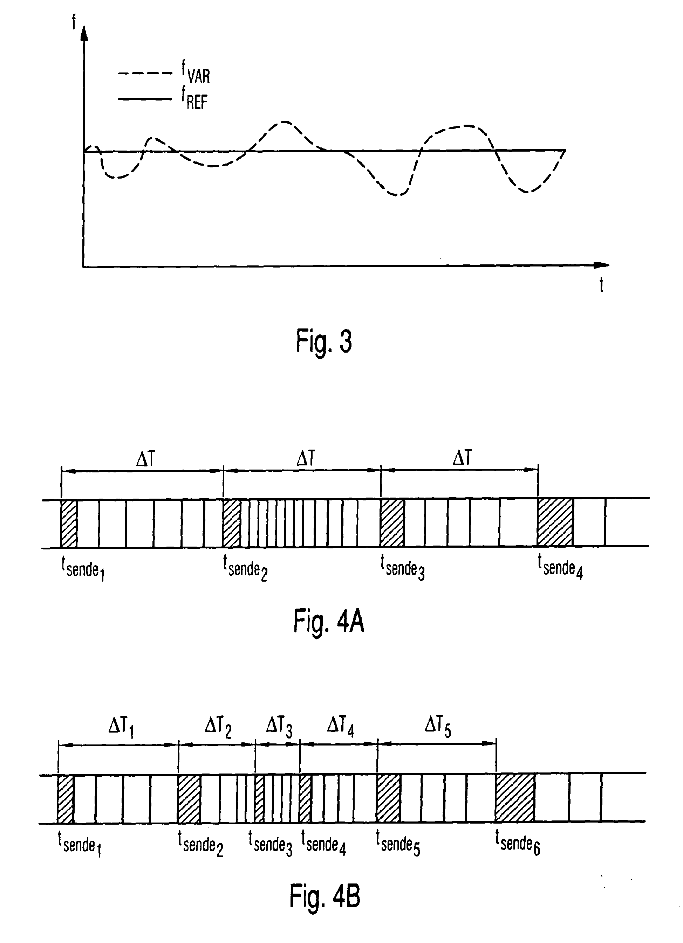

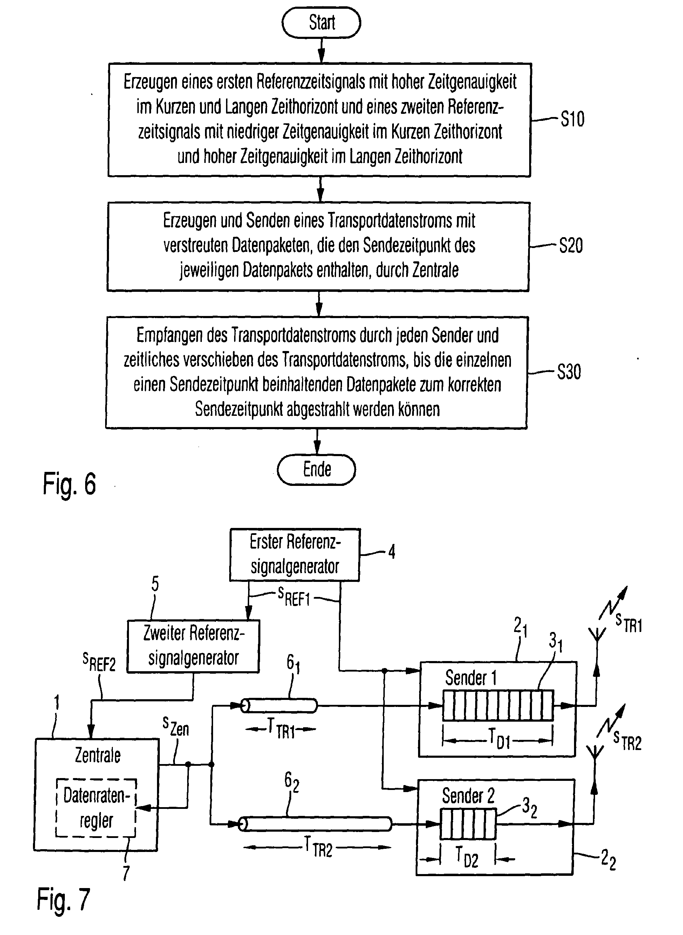

Die Übertragung der einzelnen Zeitinformationen von der Zentrale zu den einzelnen Sendern in einem konstanten Zeitraster setzt eine Übertragung des Transportdatenstroms mit einer konstanten Datenrate voraus, da andernfalls die Zeitinformationen, die an zyklische Datenpakete in einem konstanten Zyklus von Datenpaketen gebunden sind, jeweils in zeitveränderlichen, der zeitveränderlichen Datenrate entsprechenden Zeitintervallen bei den Sendern eintreffen. Die Erzeugung der Datenrate des Transportdatenstroms erfolgt in einem Gleichwellennetz auf der Basis eines der der Zentrale zugeführten Referenzzeitsignals. Da der Zentrale aus Kostengründen, wie den Figuren 2 und 7 zu entnehmen ist, kein Referenzzeitsignal $s_{Ref1}$ mit hoher Zeitgenauigkeit - beispielsweise die Global-Position-System-Zeit oder die Universal-Coordinated-Time -, sondern ein aus einem ersten Referenzsignal $s_{Ref1}$ mit hoher Zeitgenauigkeit abgeleitetes zweites Referenzzeitsignal $s_{Ref2}$ mit niedriger Zeitgenauigkeit im kurzen Zeithorizont und mit hoher Zeitgenauigkeit im langen Zeithorizont zur Verfügung gestellt wird, ergibt sich nachteilig eine zur niedrigen Zeitgenauigkeit des zweiten Referenzzeitsignals $s_{Ref2}$ korrespondierende niedrige Frequenzgenauigkeit für die Datenrate $f_{VAR}$ des Transportdatenstroms im kurzen Zeithorizont anstelle einer konstanten Referenzdatenrate $f_{REF}$ gemäß Fig. 3.

Aufgabe der Erfindung ist es deshalb, ein Verfahren und ein System zur Zeitsynchronisierung zwischen einer Zentrale und mehreren Sendern in einem Gleichwellennetz derart weiterzuentwickeln, dass auch im Fall einer niedrigen Frequenzgenauigkeit der erzeugten Datenrate des Transportdatenstroms eine zeitsynchrone Ausstrahlung der einzelnen Datenpakete des Transportdatenstroms bei allen Sendern gewährleistet ist.

Die Erfindungsaufgabe wird durch ein Verfahren zur Zeitsynchronisierung zwischen einer Zentrale und mehreren Sendern mit den Merkmalen des Anspruchs 1 und durch ein System zur Zeitsynchronisierung zwischen einer Zentrale und mehreren Sendern mit den Merkmalen des Anspruchs 10 gelöst.

Erfindungsgemäß wird ausgenutzt, dass bei einem der Zentrale zugeführten zweiten Referenzzeitsignal mit niedriger Zeit- und Frequenzgenauigkeit im kurzen Zeithorizont und hoher Zeit- und Frequenzgenauigkeit im langen Zeithorizont und bei einer der im kurzen Zeithorizont zeitveränderlichen Frequenz des zweiten Referenzzeitsignals entsprechenden zeitveränderlichen Datenrate des Transportdatenstroms die Zeitgenauigkeit der für einzelne Datenpakete im Transportdatenstrom zu bestimmenden Sendezeitpunkte, die zum zweiten Referenzzeitsignal referenziert sind, durch zeitliche Mittelung der Zeit- und Frequenzgenauigkeit des zweiten Referenzzeitsignals erhöht werden.

Die zeitliche Mittelung der Zeit- und Frequenzgenauigkeit des zweiten Referenzzeitsignals erfolgt in einer ersten Variante durch zeitliche Mittelung der im kurzen Zeithorizont zeitveränderlichen Frequenz des zweiten Referenzzeitsignals.

In einer zweiten Variante erfolgt die zeitliche Mittelung der Zeit- und Frequenzgenauigkeit des zweiten Referenzzeitsignals durch Summation der bereits gesendeten Datenpakete und anschließende Gewichtung mit der der Frequenz des ersten Referenzzeitsignals entsprechenden Referenzdatenrate.

Mit Bezug zum zweiten Referenzzeitsignal, dessen Zeit- und Frequenzgenauigkeit durch zeitliche Mittelung der Zeit- und Frequenzgenauigkeit des zweiten Referenzzeitsignals erhöht wird, erfolgt die Bestimmung des zu einzelnen Datenpaketen des Transportdatenstroms gehörigen Sendezeitpunkts. Diese Sendezeitpunkte weisen folglich eine hohe Zeitgenauigkeit auf.

Der vom jeweiligen Sender empfangene Transportdatenstrom wird im jeweiligen Sender soweit zeitlich verschoben, bis das mit einem Sendezeitpunkt versehene Datenpaket bezüglich eines jedem Sender zugeführten ersten Referenzzeitsignals mit hoher Zeitgenauigkeit zum korrekte Sendezeitpunkt ausgestrahlt werden kann.

Bezüglich der Auswahl der mit jeweils einem Sendezeitpunkt versehenen Datenpakete können folgende zwei Ausführungsformen der Erfindung angegeben werden.

In einer ersten erfindungsgemäßen Ausführungsform werden die einzelnen Zeitintervalle zwischen zwei aufeinander folgenden Datenpaketen, die jeweils einen zugehörigen Sendezeitpunkt enthalten, konstant gehalten. Aufgrund der im kurzen Zeithorizont zeitveränderlichen Datenrate ist die Anzahl von Datenpaketen zwischen zwei aufeinander folgenden Datenpaketen, die jeweils einen zugehörigen Sendezeitpunkt enthalten, veränderlich. Somit ist in den einzelnen Sendern jeweils ein Puffer vorzusehen, in dem die einzelnen Datenpakete bis zu ihrem Sendezeitpunkt zwischengespeichert und damit zeitlich verschoben werden. Die Sendedatenrate ist hierbei bei allen Sendern konstant.

In einer zweiten Ausführungsform der Erfindung wird die Anzahl der Datenpakete zwischen jeweils zwei aufeinander folgenden Datenpaketen, die jeweils einen zugehörigen Sendezeitpunkt enthalten, konstant gehalten. Die Sendedatenrate bei allen Sendern ist entsprechend der zeitveränderlichen Datenraten des Transportdatenstroms von der Zentrale zu den Sendern zeitveränderlich.

Der Sendezeitpunkt, der in einzelnen Datenpaketen des Transportdatenstroms abgelegt ist, kann eine zum ersten bzw. zweiten Referenzzeitsignal referenzierte absolute Zeitangabe oder relative Zeitangabe sein.

Zur Verhinderung einer Drift der Datenrate des Transportdatenstroms von der konstanten Frequenz des ersten Referenzzeitsignals im längeren Zeithorizont, wird die Datenrate des Transportdatenstroms in einem Regler zur Datenratenregelung innerhalb der Zentrale einer der Frequenz des ersten Referenzzeitsignals entsprechenden Referenzdatenrate nachgeregelt.

Die beiden Ausführungsformen des erfindungsgemäßen Verfahrens und des erfindungsgemäßen Systems zur Zeitsynchronisierung zwischen einer Zentrale und mehreren Sendern in einem Gleichwellennetz werden im Folgenden anhand der Zeichnung im Detail erläutert. Die Figuren der Zeichnung zeigen:

Fig. 1        ein Blockdiagramm eines Systems zur Zeitsynchronisierung zwischen einer Zentrale und mehreren Sendern in einem Gleichwellennetz,

Fig. 2        ein Zeitdiagram mit dem Verlauf des ersten und zweiten Referenzzeitsignals,

Fig. 3        ein Zeitdiagramm mit dem Verlauf einer zeitveränderlichen Datenrate und einer konstanten Referenzdatenrate des Transportdatenstroms,

Fig. 4A, 4B   ein Transportdatenstrom mit Sendezeitpunkte beinhaltenden Datenpaketen einer ersten und zweiten erfindungsgemäßen Ausführung,

Fig. 5A, 5B   eine Struktur eines Datenpakets mit relativen und absoluten Sendezeitpunkt und zugehöriges Zeitdiagramm mit Bestimmung des Sendezeitpunkt anhand des ersten oder zweiten Referenzzeitsignals und

Fig. 6        ein Flussdiagramm eines erfindungsgemäßen Verfahrens zur Zeitsynchronisierung zwischen einer Zentrale und mehreren Sendern in einem Gleichwellennetz und

Fig. 7        ein Blockdiagram eines erfindungsgemäßen Systems zur Zeitsynchronisierung zwischen einer Zentrale und mehreren Sendern in einem Gleichwellennetz.

Im Folgenden wird das erfindungsgemäße System zur Zeitsynchronisierung zwischen einer Zentrale und mehreren Sendern in einem Gleichwellennetz anhand des Blockdiagramms in Fig. 7 beschrieben.

In einem ersten Referenzsignalgenerator 4 wird ein erstes Referenzzeitsignal $s_{REF1}$ mit einer hohen Zeitgenauigkeit gemäß Fig. 2 (durchgezogene Linie) und mit einer Referenzfrequenz $f_{REF}$ von hoher Frequenzgenauigkeit gemäß Fig. 3 (durchgezogene Linie) erzeugt. Hierbei handelt es sich z. B. entweder um die Global-Position-System-Zeit oder um die Universal-Coordinated-Time oder um eine gleichwertige standardisierte Systemzeit von hoher Zeit- und gleichzeitig von hoher Frequenzgenauigkeit. Aus diesem ersten Referenzzeitsignal $s_{REF1}$ wird in einem zweiten Referenzsignalgenerator 5 ein zweites Referenzzeitsignal $s_{REF2}$ mit einer gegenüber der Zeitgenauigkeit des ersten Referenzzeitsignals $s_{REF1}$ niedrigeren Zeitgenauigkeit im kurzen Zeithorizont und einer zur Zeitgenauigkeit des ersten Referenzzeitsignals $s_{REF1}$ gleichwertigen Zeitgenauigkeit im langen Zeithorizont gemäß Fig. 2 (gestrichelte Linie) und mit einer zeitveränderlichen Frequenz $f_{VAR}$ mit einer gegenüber der Referenzfrequenz des ersten Referenzzeitsignals $s_{REF1}$ niedrigeren Frequenzgenauigkeit gemäß Fig. 3 (gestrichelte Linie) erzeugt.

Es handelt sich also um ein Referenzzeitsignal, dessen Zeit gegenüber der Zeit eines Referenzzeitsignals mit höherer Genauigkeit schwankt - gegenüber der Zeit eines Referenzzeitsignals mit höherer Genauigkeit vor- oder nachgeht - und dessen zeitliche Auflösung relativ grob ist, so dass sich die momentane Zeit nicht beliebig genau auslesen lässt. Bei dem zweiten Referenzzeitsignal $s_{REF2}$ kann es sich beispielsweise um das in einem Netzwerk benutzte Network-Time-Protocol handeln, dessen niedrigere Zeit- und Frequenzgenauigkeit aus der stochastischen Paketlaufzeit in einem Netzwerk und der temperaturabhängigen Drift des synchronisierten lokalen Oszillators im an einem angeschlossenen Empfänger hervorgerufen wird.

Anhand des zweiten Referenzzeitsignals $s_{REF2}$ und der zu übertragenden, bevorzugt MPEG-2-kodierten Daten wird in der Zentrale ein Transportdatenstrom $s_{Zen}$ mit einzelnen Datenpaketen erzeugt. Dieser Transportdatenstrom weist aufgrund der im kurzen Zeithorizont niedrigen Frequenzgenauigkeit eine zeitveränderliche Datenrate im kurzen Zeithorizont und eine näherungsweise konstante Datenrate im langen Zeithorizont auf. Um eine Drift der Datenrate des Transportdatenstroms $s_{Zen}$ im langen Zeithorizont zu verhindern, ist in der Zentrale 1 ein Regler 7 zur Datenratenregelung vorgesehen, der eine Drift der Datenrate des Transportdatenstroms $s_{Zen}$ im langen Zeithorizont identifiziert und die Datenrate des Transportdatenstroms $s_{Zen}$ an die der konstanten Frequenz des ersten Referenzzeitsignals entsprechenden Referenzdatenrate nachregelt.

Die einzelnen Datenpakete weisen zusätzlich aufgrund der im kurzen Zeithorizont niedrigeren Zeitgenauigkeit einen gewissen positiven oder negativen Zeitversatz - ZeitOffset $t_{OFF}$ - zur Zeit des ersten Referenzzeitsignals $s_{REF1}$ auf.

Zur Synchronisierung aller Sender $2_1$, $2_2$, ..., $2_i$ untereinander wird den einzelnen Datenpaketen des Transportdatenstroms der zum jeweiligen Datenpaket gehörige für alle Sender $2_1$, $2_2$, ..., $2_i$ gemeinsame Sendezeitpunkt $t_{Sende_1} = t_{Sende_2} = ... = t_{Sende_i}$ hinzugefügt. Im Extremfall enthält jedes Datenpaket des Transportdatenstroms jeweils seinen zugehörigen gemeinsamen Sendezeitpunkt. Aus Praktikabilitätsgründen wird zur Erzielung einer bestimmten Übertragungseffizienz nur denjenigen Datenpaketen des Transportdatenstroms jeweils ein zugehöriger Sendezeitpunkt hinzugefügt, die in einem bestimmten Zeitintervall zueinander oder nach einer bestimmten Anzahl von Datenpaketen ausgestrahlt werden.

Der für derartige Datenpakete des Transportdatenstroms ermittelte Sendezeitpunkt wird anhand der gegenüber dem ersten Referenzzeitsignal niedrigeren Zeitgenauigkeit des zweiten Referenzzeitsignals bestimmt. Zur Erhöhung der Zeitgenauigkeit bei der Bestimmung des jeweiligen Sendezeitpunkts wird durch zeitliche Mittelung der Zeit- und Frequenzgenauigkeit des zweiten Referenzzeitsignals mit seiner im kurzen Zeithorizont niedrigeren Zeitgenauigkeit mit zunehmender Zeit eine Annäherung des gemittelten zweiten Referenzzeitsignals an das erste Referenzzeitsignal mit seiner hohen Zeitgenauigkeit erzielt.

Die zeitliche Mittelung der Zeit- und Frequenzgenauigkeit des zweiten Referenzzeitsignals $s_{REF2}$, das gemäß Fig. 3 ein Frequenzsignal mit einer zeitveränderlichen Frequenz ist, kann in einer ersten Variante durch Ermittlung des zeitveränderlichen Frequenzverlaufes $f_{VAR}(i \cdot \Delta t)$ gemäß Fig. 1 in einem geeignet gewählten Zeitraster $\Delta t$ und anschließende Mittelung dieses ermittelten Frequenzverlaufes $f_{VAR}(i \cdot \Delta t)$ gemäß Gleichung (1) erfolgen. Der Mittelungsvorgang bewirkt ein Angleichen des zeitveränderlichen Frequenzverlaufes $f_{VAR}(i \cdot \Delta t)$ an den konstanten Referenzfrequenzverlauf $f_{REF}$ mit zunehmender Zeit. Die Mittelung des zeitveränderlichen Frequenzverlaufes $f_{VAR}(i \cdot \Delta t)$ erzeugt ein zeitlich gemitteltes zweites Referenzzeitsignals $\overline{s}_{REF2}$ gemäß Gleichung (2).

$$\overline{f}_{VAR}(\tau \cdot \Delta t) = \frac{\sum_{i=0}^{\tau} f_{VAR}(i \cdot \Delta t) \cdot \Delta t}{\tau \cdot \Delta t} \qquad (1)$$

$$\overline{s}_{REF2} = s_{REF2}(\overline{f}_{REF2}) \qquad (2)$$

Die zeitliche Mittelung der Zeit- und Frequenzgenauigkeit des zweiten Referenzzeitsignals $\overline{s}_{REF2}$ kann alternativ in einer zweiten Variante durch Summation der bis zum jeweiligen Sendezeitpunkt $t_{Sende}$ zu sendenden Datenpakete $n(i)$ und anschließende Gewichtung mit der Referenzdatenrate $f_{REF}$ gemäß Gleichung (3) erfolgen.

$$\overline{s}_{REF2}(t_{Sende}) = \frac{\sum_{i=0}^{t_{Sende}} n(i)}{f_{REF}} \qquad (3)$$

Anhand des somit bestimmten zeitlich gemittelten zweiten Referenzzeitsignals $\overline{s}_{REF2}$ wird der Sendezeitpunkt $t_{Sende}$ des jeweiligen Datenpakets $n(t_{Sende})$ im Transportdatenstrom, der eine derartige Zeitinformation trägt, ermittelt.

Hierzu ergeben sich entsprechend Fig. 4A und 4B zwei erfindungsgemäße Ausführungsformen.

In der ersten erfindungsgemäßen Ausführungsform gemäß Fig. 4A werden diejenigen Datenpakete $n(i)$ im zu sendenden Transportdatenstrom ausgewählt und mit dem zugehörigen Sendezeitpunkt $t_{Sende_i}$ versehen (schraffierte Flächen in Fig. 4A), deren Sendezeitpunkte $t_{Sende_i}$ bei gegebener zu zeitveränderlichen Frequenz $f_{VAR}$ des zweiten Referenzzeitsignals $s_{REF2}$ jeweils in äquidistanten Zeitintervallen $\Delta t$ zueinander zeitlich beabstandet sind. Da die Anzahl der zu sendenden Datenpakete des Transportdatenstroms innerhalb der einzelnen Zeitintervalle $\Delta t$ variiert, sind in den einzelnen Sendern die einzelnen Datenpakete bei Bedarf zwischenzuspeichern, um ein Ausstrahlen aller Datenpakete des Transportdatenstroms - auch derjenigen Datenpakete, die keine den jeweiligen Sendezeitpunkt beinhaltende Zeitinformation enthalten (nichtschraffierte Flächen in Fig. 4A) - mit einer konstanten Sendedatenrate zu garantieren.

In der zweiten erfindungsgemäßen Ausführungsform gemäß Fig. 4B werden diejenigen Datenpakete $n(i)$ im zu sendenden Transportdatenstrom ausgewählt und mit dem zugehörigen Sendezeitpunkt $t_{Sende_i}$ versehen, die jeweils nach einem Zyklus von Datenpaketen mit jeweils einer konstanten vorher geeignet festgelegten Anzahl von Datenpaketen zu senden sind. Aufgrund der zeitveränderlichen Frequenz $f_{VAR}$ des zweiten Referenzzeitsignals $s_{REF2}$ sind die mit jeweils einem Sendezeitpunkt $t_{Sende_i}$ versehenen Datenpakete $n(i)$ in nicht-äquidistanten Zeitintervallen $\Delta t_1$, $\Delta t_2$, $\Delta t_3$, $\Delta t_4$ usw. versehen. Die Ausstrahlung der einzelnen Datenpakete des Transportdatenstroms in jedem Sender $2_1$, $2_2$, ..., $2_i$ erfolgt folglich mit einer nicht-konstanten Sendedatenrate. Ein Zwischenpuffern von einzelnen Datenpaketen in den einzelnen Sendern $2_1$, $2_2$, ..., $2_i$ zwecks Erzielung einer konstanten Sendedatenrate ist folglich nicht erforderlich.

Ein derartig von der Zentrale 1 erzeugter Transportdatenstrom $s_{Zen}$, der auch Datenpakete $n(i)$ mit zugehörigen Sendezeitpunkten $t_{Sende_i}$ enthält, wird von der Zentrale den einzelnen Sendern $2_1$, $2_2$,...,$2_i$ über zugehörige Verbindungsstrecken $6_1$, $6_2$, ..., $6_i$ übertragen. Die einzelnen Übertragungsstrecken $6_1$, $6_2$, ..., $6_i$ weisen jeweils eine unterschiedliche Distanz auf, in denen der von der Zentrale 1 erzeugte Transportdatenstrom $s_{Zen}$ eine unterschiedliche Verzögerung $t_{TR1}$, $t_{TR2}$,...,$t_{TRi}$ erfährt.

Ein vom Sender $2_i$ empfangenes Datenpaket $n(i)$ des Transportdatenstroms $s_{Zen}$, das zum Ausstrahlungszeitpunkt $t_{Sende_i}$ vom Sender $2_i$ ausgestrahlt wird, muss in einem zum Sender $2_i$ gehörigen Pufferspeicher $3_i$ zwischengespeichert werden, um das Zeitintervall zwischen dem Zeitpunkt $t_G$ der Erzeugung des Datenpakets $n(i)$, der mit der Zeitgenauigkeit des der Zentrale 1 zugeführten zweiten Referenzzeitsignals $s_{REF2}$ bestimmt wird, und dem Zeitpunkt $t_{Sende_i}$ des Ausstrahlens des Datenpakets $n(i)$ durch den Sender $2_i$, der mit der Zeitgenauigkeit des allen Sendern $2_1$, $2_2$, ..., $2_i$ jeweils zugeführten ersten Referenzzeitsignals $s_{REF1}$ bestimmt wird, zeitlich zu überbrücken. Zur Ermittlung der Verzögerungszeit $t_{Di}$, innerhalb derer das jeweilige Datenpaket $n(i)$ im Pufferspeicher $3_i$ zur Überbrückung diese Zeitintervalls zwischengespeichert wird, wird gemäß Gleichung (4) auch die Verzögerungszeit $t_{TRi}$ der Übertragungsstrecke $6_i$ und der Zeitoffset $t_{OFF}$ zwischen der niedrigeren Zeitgenauigkeit des zweiten

Referenzzeitsignals zur höheren Zeitgenauigkeit des ersten Referenzzeitsignals berücksichtigt.

$$t_{Di} = t_{Sende_i} - t_G - t_{TRi} - t_{OFF} \qquad\qquad (4)$$

Ein empfangenes Datenpaket $n(i)$, das im Pufferspeicher $3_i$ des Senders $2_i$ über den Zeitraum der Verzögerungszeit $t_{Di}$ zwischengespeichert wird, wird um die Verzögerungszeit $t_{Di}$ zeitlich verschoben, so dass es zum Sendezeitpunkt $t_{Sende_i}$ vom Sender $2_i$ im Rahmen des auszustrahlenden Transportdatenstroms $s_{TRi}$ gesendet wird.

Erfolgt die Zwischenpufferung der einzelnen empfangenen Datenpakete $n(i)$ bei allen Sendern $2_1$, $2_2$,..., $2_i$ gemäß Gleichung (4) in äquivalenter Weise, so kann das identische Datenpaket $n(i)$ bei allen Sendern $2_1$, $2_2$, ..., $2_i$ zeitsynchron zum identischen Sendezeitpunkt $t_{Sende_1}$ =$t_{Sende_2}$ =...=$t_{Sende_i}$ in allen auszustrahlenden Transportdatenstroms $s_{TR1}$=$s_{TR2}$=...=$s_{TRi}$ gesendet werden.

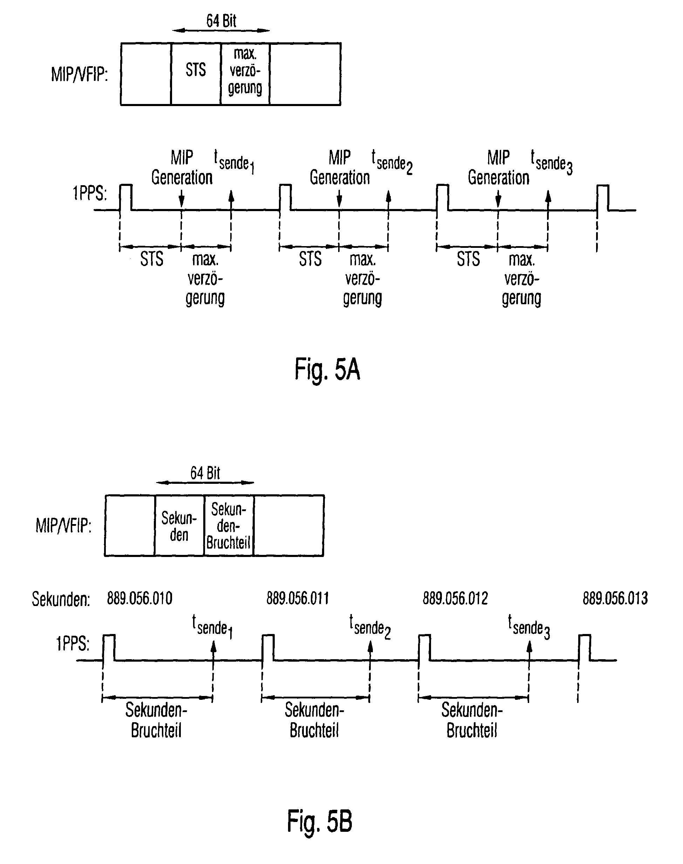

Der Sendezeitpunkt $t_{Sende_i}$ des Datenpakets $n(i)$ im Sender $2_i$ kann gemäß Fig. 5A als zum ersten Referenzzeitsignal $s_{REF1}$ referenzierte relative Zeitangabe angegeben werden. Hierzu wird in einem sogenannten MIP- oder VFIP-Datenpaket der Sendezeitpunkt $t_{Sende_i}$ des MIP- oder VFIP-Datenpakets als Summe eines Synchronisierungs-Zeitstempels (Sync Timestamp (STS)), der zum letzten empfangenen 1PPS-Puls des als 1-Puls-Per-Second-(1PPS)-Signal realisiertes erstes Referenzzeitsignal $s_{REF1}$ referenziert ist, und der maximalen Verzögerungszeit aus allen Verzögerungszeiten $t_{TR1}$,$t_{TR2}$,...,$t_{TRi}$ zwischen der Zentrale 1 und jedem der Sender $2_1$, $2_2$, ..., $2_i$ ermittelt. Durch diese Art der Referenzierung des Sendezeitpunkts $t_{Sende_i}$ des Datenpakets $n(i)$ relativ zum zuletzt empfangenen Puls des 1PPS-Signals müssen die i.a. nicht bekannten Verzögerungszeiten $t_{TR1}$,$t_{TR2}$,...,$t_{TRi}$ zwischen der Zentrale 1 und allen Sendern $2_1$, $2_2$, ..., $2_i$ zur Bestimmung des Sendezeitpunkts $t_{Sende_i}$ des Datenpakets $n(i)$ nicht ermittelt werden. Andererseits darf die maximale Verzögerungszeit aus allen Verzögerungszeiten $t_{TR1}$,$t_{TR2}$,...,$t_{TRi}$ nicht größer als eine Sekunde sein, da andernfalls keine eindeutige Referenzierung des Sendezeitpunkts $t_{Sende_i}$ des Datenpakets $n(i)$ zum 1PPS-Signal möglich ist. Außerdem ist es nicht möglich, vorab beliebig weit in der Zukunft liegende Sendezeitpunkte $t_{Sende_i}$ des jeweiligen MIP- bzw. VFIP-Datenpakets zu berechnen.

Der Sendezeitpunkt $t_{Sende_i}$ des Datenpakets $n(i)$ im Sender $2_i$ kann gemäß Fig. 5B auch als zum ersten Referenzzeitsignal $s_{REF1}$ referenzierte absolute Zeitangabe angegeben sein. Hierzu enthält das MIP- bzw. VFIP-Datenpaket den Sendezeitpunkt $t_{Sende_i}$ des MIP- bzw. VFIP-Datenpakets als abgelaufene GPS-Sekunde des zuletzt empfangenen 1PPS-Pulses seit Beginn eines GPS-Referenzzeitpunktes-typischerweise in einer bestimmten GPS-Woche oder in einem bestimmten GPS-Jahr - zuzüglich eines GPS-Sekundenbruchteils. Auf diese Weise ist es möglich, beliebig weit in der Zukunft gelegene Sendezeitpunkte $t_{Sende_i}$ des jeweiligen MIP- bzw. VFIP-Datenpakets vorab zu berechnen und beliebig große Verzögerungszeiten der einzelnen Übertragungsstrecken zuzulassen.

Die Verwendung einer relativen oder absoluten Zeitangabe für den Sendezeitpunkt $t_{Sende_i}$ des Datenpakets $n(i)$ im Sender $2_i$ muss sich nicht auf die GPS-Zeit beziehen. Von der Erfindung sind auch andere standardisierte Referenzzeitquellen, beispielsweise die Universal-Coordinated-Time (UTC), abgedeckt.

Im Flussdiagramm der Fig. 6 ist das erfindungsgemäße Verfahren zur Zeitsynchronisierung zwischen einer Zentrale 1 und mehreren Sendern $2_1$, $2_2$, ..., $2_i$ dargestellt.

In einem ersten Verfahrensschritt S10 wird in einem ersten Referenzsignalgenerator 4 ein erstes Referenzzeitsignal $s_{REF1}$ mit einer hohen Zeit- und Frequenzgenauigkeit im kurzen und langen Zeithorizont, also beispielsweise ein zu einem GPS-Signal gehöriges 1-PPS-Signal oder 10-MHz-Signal oder ein UTC-Signal, erzeugt. Alternativ kann das Signal auch von einer externen Signalquelle empfangen werden. Aus diesem ersten Referenzzeitsignal $s_{REF1}$ erfolgt in einem zweiten Referenzsignalgenerator 5 die Generierung eines zweiten Referenzzeitsignals $s_{REF2}$ mit einer gegenüber der hohen Zeit- und Frequenzgenauigkeit des ersten Referenzzeitsignals $s_{REF1}$ niedrigeren Zeit- und Frequenzgenauigkeit im kurzen Zeithorizont und einer hohen Zeit- und Frequenzgenauigkeit im langen Zeithorizont. Hierbei kann es sich beispielsweise um das im Internet verwendete NTP-Zeitprotokoll handeln. Alternativ kann das Signal auch von einer externen Signalquelle empfangen werden.

Im nächsten Verfahrensschritt S20 erfolgt in der Zentrale 1 die Generierung eines den einzelnen Sendern $2_1$, $2_2$, ..., $2_i$ zugeführten Transportdatenstroms $s_{Zen}$ mit einzelnen Datenpaketen, die die zu übertragenden und typischerweise MPEG-2-kodierten Informationen enthalten. Als Zeit- und Frequenzreferenz des Transportdatenstroms $s_{Zen}$ dient das zweite Referenzzeitsignal $s_{REF2}$. Die Datenrate des von der Zentrale 1 erzeugten Transportdatenstroms $s_{Zen}$ entspricht der Frequenz des zweiten Referenzzeitsignals $s_{REF2}$ mit dessen vergleichsweise niedriger Frequenzgenauigkeit im kurzen Zeithorizont und hoher Frequenzgenauigkeit im langen Zeithorizont. Um ein Driften der Datenrate des Transportdatenstroms im langen Zeithorizont zu verhindern, wird die Datenrate des Transportdatenstroms in der Zentrale an die der Frequenz des ersten Referenzzeitsignals $s_{REF2}$ entsprechenden Referenzdatenrate mit hoher Frequenzgenauigkeit im kurzen und langen Zeithorizont geregelt.

Analog werden die einzelnen Datenpakete innerhalb des erzeugten Transportdatenstroms $s_{Zen}$ mit dem zweiten Referenzzeitsignal $s_{REF2}$ zeitlich synchronisiert. Die Sendezeitpunkte $t_{Sende_i}$ der mit einem zugehörigen Sendezeitpunkt $t_{Sende_i}$ versehenen Datenpakete $n(i)$ werden ebenfalls mit Zeitbezug zum zweiten Referenzzeitsignal $s_{REF2}$ ermittelt, wobei entweder eine relative Zeitangabe gemäß Fig. 5A oder eine absolute Zeitangabe gemäß Fig. 5B verwendet wird.

Die Zeitgenauigkeit des Sendezeitpunkte $t_{Sende_i}$ der mit einem zugehörigen Sendezeitpunkt $t_{Sende_i}$ versehenen Datenpakete $n(i)$ wird entweder durch Mittelung des Frequenzverlaufes des zweiten Referenzzeitsignals $s_{REF2}$ gemäß Gleichung (1) oder durch Summation der bis zum Sendezeitpunkt $t_{Sende_i}$ zu übertragenden Datenpakete und anschließende Gewichtung mit der als Referenzfrequenz $f_{REF}$ dienenden frequenzgenauen Frequenz des ersten Referenzzeitsignals $s_{REF1}$ gemäß Gleichung (3) erfindungsgemäß erhöht.

Die Wahl der mit einem Sendezeitpunkt $t_{Sende_i}$ versehenen Datenpakete $n(i)$ innerhalb des von der Zentrale 1 erzeugten Transportdatenstroms $s_{Zen}$ kann entweder gemäß Fig. 4A zyklisch in einem konstanten Zeitraster $\Delta t$ oder gemäß Fig. 4B zyklisch in einem Raster mit einer konstanten Anzahl von Datenpakete, welche keine Sendezeitpunkt $t_{Sende_i}$ beinhalten, zwischen jeweils mit einem Sendezeitpunkt $t_{Sende_i}$ versehenen Datenpakete $n(i)$ erfolgen.

Im abschließenden Verfahrensschritt S30 wird der von der Zentrale 1 erzeugte und über die einzelnen Übertragungsstrecken $6_1$, $6_2$, ..., $6_i$ zu den einzelnen Sendern $2_1$, $2_2$, ..., $2_i$ übertragene Transportdatenstrom $s_{Zen}$ vom jeweiligen Sender $2_1$, $2_2$,..., $2_i$ empfangen und durch Zwischenspeichern im jeweils zugeordneten Pufferspeicher $3_1$, $3_2$, ..., $3_i$ über eine gemäß Gleichung (4) berechnete Verzögerungszeit $t_{D1}, t_{D2},...,t_{Di}$ zeitlich verschoben, so dass das mit dem Sendezeitpunkt $t_{Sende_i}$ versehene Datenpaket n(i) des empfangenen Transportdatenstroms $s_{Zen}$ bei allen Sender $2_1$, $2_2$, ..., $2_i$ zeitsynchron zum identischen Sendezeitpunkt $t_{Sende_i}$ ausgestrahlt wird. Analog werden durch den Vorgang des Zwischenspeicherns in den den einzelnen Sendern $2_1$, $2_2$, ..., $2_i$ jeweils zugeordneten Pufferspeichern $3_1$, $3_2$,..., $3_i$ die zwischen den mit jeweils einem Sendezeitpunkt $t_{Sende_i}$ versehene Datenpaketen $n(i)$ im Transportdatenstrom übertragenen Datenpakete zu ihren zugehörigen Sendezeitpunkten jeweils von allen Sendern $2_1$, $2_2$,..., $2_i$ zeitsynchron ausgestrahlt.

Die Erfindung ist nicht auf die dargestellten Ausführungsformen und Varianten des erfindungsgemäßen Verfahrens und des erfindungsgemäßen Systems zur Zeitsynchronisierung zwischen einer Zentrale und mehreren Sendern in einem Gleichwellennetz beschränkt. Von der Erfindung ist auch die Zeitsynchronisierung zwischen einer Zentrale und mehreren Sendern in einem Mehrwellennetz abgedeckt, bei der mehrere Sender partiell zu einem Gleichwellennetz verkoppelt werden und überregional in einem Gleichwellennetzbetrieb den gleichen Übertragungsinhalt synchron ausstrahlen, während regional in einem Mehrwellennetzbetrieb jeder Sender asynchron einen jeweils unterschiedlichen Übertragungsinhalt ausstrahlt.

# EP 2 294 732 B1

**Patentansprüche**

1. Verfahren zur Zeitsynchronisierung zwischen einer Zentrale (1) und mehreren Sendern ($2_1$, $2_2$, ..., $2_i$) insbesondere in einem Gleichwellen-Netz, mit folgenden Verfahrensschritten:

   • Erzeugen oder Empfangen eines ersten Referenzzeitsignals ($s_{REF1}$) mit einer im kurzen und langen Zeithorizont hohen Zeit- und Frequenzgenauigkeit und eines der Zentrale (1) zugeführten zweiten Referenzzeitsignals ($s_{REF2}$) mit einer im kurzen Zeithorizont geringen und im langen Zeithorizont hohen Zeit- und Frequenzgenauigkeit,
   • Erzeugen eines mehreren Sendern ($2_1$, $2_2$, ..., $2_i$) zuzuführenden Transportdatenstroms ($s_{Zen}$) mit einer der Frequenz des zweiten Referenzzeitsignals ($s_{REF2}$) entsprechenden zeitveränderlichen Datenrate durch die Zentrale (1), wobei im Transportdatenstrom ($s_{Zen}$) Datenpakete ($n(i)$) verteilt sind, die den zum ersten Referenzzeitsignal ($s_{REF2}$) referenzierten Sendezeitpunkt ($t_{Sende_1}, t_{Sende_2}, ..., t_{Sende_i}$) des Datenpakets ($n(i)$) bei den Sendern ($2_1$, $2_2$, ..., $2_i$) beinhalten, und wobei die Zeitgenauigkeit des Sendezeitpunkts ($t_{Sende_1}, t_{Sende_2}, ..., t_{Sende_i}$) des jeweiligen Datenpakets ($n(i)$) durch zeitliche Mittelung der Zeit- und Frequenzgenauigkeit des zweiten Referenzzeitsignals ($s_{REF2}$) optimiert wird, und
   • zeitliches Verschieben des von der Zentrale (1) durch den jeweiligen Sender ($2_1$, $2_2$, ..., $2_i$) empfangenen Transportdatenstroms ($s_{Zen}$), bis die jeweils einen Sendezeitpunkt ($t_{Sende_1}, t_{Sende_2}, ..., t_{Sende_i}$) beinhaltenden Datenpakete ($n(i)$) des Transportdatenstroms ($S_{Zen}$) bezüglich des dem jeweiligen Sender zugeführten ($2_1$, $2_2$, ..., $2_i$) ersten Referenzzeitsignals ($s_{REF1}$) zum korrekten Sendezeitpunkt ($t_{Sende_1}, t_{Sende_2}, ..., t_{Sende_i}$) gesendet werden.

2. Verfahren zur Zeitsynchronisierung nach Anspruch 1,
   **dadurch gekennzeichnet,**
   **dass** die zeitliche Mittelung der Zeit- und Frequenzgenauigkeit des zweiten Referenzzeitsignals ($s_{REF2}$) durch Summation der bisher gesendeten Datenpakete ($n(i)$) und Gewichtung mit einer der Frequenz des ersten Referenzzeitsignals ($s_{REF1}$) entsprechenden Referenzdatenrate ($f_{REF}$) erfolgt.

3. Verfahren zur Zeitsynchronisierung nach Anspruch 1,
   **dadurch gekennzeichnet,**
   **dass** die zeitliche Mittelung der Zeit- und Frequenzgenauigkeit des zweiten Referenzzeitsignals ($s_{REF2}$) durch zeitliche Mittelung der zeitveränderlichen Frequenz ($f_{VAR}$) des zweiten Referenzzeitsignals ($s_{REF2}$) erfolgt.

4. Verfahren zur Zeitsynchronisierung nach einem der Ansprüche 1 bis 3,
   **dadurch gekennzeichnet,**
   **dass** das Zeitintervall ($\Delta t$) zwischen zwei aufeinander folgenden Sendezeitpunkten ($t_{Sende_1}, t_{Sende_2}, ..., t_{Sende_i}$) von jeweils einen Sendezeitpunkt ($t_{Sende_1}, t_{Sende_2}, ..., t_{Sende_i}$) beinhaltenden Datenpaketen ($n(i)$) konstant ist und der Transportdatenstrom ($s_{Zen}$) im Zeitintervall ($n(i)$) eine von der im jeweiligen Zeitintervall ($n(i)$) vorliegenden Datenrate abhängige Anzahl von Datenpakete enthält.

5. Verfahren zur Zeitsynchronisierung nach Anspruch 4,
   **dadurch gekennzeichnet,**
   **dass** die im jeweiligen Sender ($2_1$, $2_2$, ..., $2_i$) vor ihrem Sendezeitpunkt ($t_{Sende_1}, t_{Sende_2}, ..., t_{Sende_i}$) empfangenen Datenpakete in einem Puffer ($3_1$, $3_2$, ..., $3_i$) des jeweiligen Senders ($2_1$, $2_2$, ..., $2_i$) zwischengespeichert und somit zeitlich verschoben werden.

6. Verfahren zur Zeitsynchronisierung nach einem der Ansprüche 1 bis 3,
   **dadurch gekennzeichnet,**
   **dass** das Zeitintervall ($\Delta t_1, \Delta t_2, ...$) zwischen zwei aufeinander folgenden Sendezeitpunkten ($t_{Sende_1}, t_{Sende_2}, ..., t_{Sende_i}$) von jeweils einen Sendezeitpunkt ($t_{Sende_1}, t_{Sende_2}, ..., t_{Sende_i}$) beinhaltenden Datenpaketen zeitveränderlich ist und der Transportdatenstrom ($s_{Zen}$) in jedem Zeitintervall ($\Delta t_1, \Delta t_2, ...$) jeweils eine konstante Anzahl von Datenpaketen enthält.

7. Verfahren zur Zeitsynchronisierung nach einem der Ansprüche 1 bis 6,
   **dadurch gekennzeichnet,**
   **dass** der Sendezeitpunkt ($t_{Sende_1}, t_{Sende_2}, ..., t_{Sende_i}$) eine zum ersten oder zweiten Referenzzeitsignal ($s_{REF1}$, $s_{REF2}$) referenzierte absolute Zeitangabe ist.

8. Verfahren zur Zeitsynchronisierung nach einem der Ansprüche 1 bis 7,
**dadurch gekennzeichnet,**
**dass** der Sendezeitpunkt $(t_{Sende_1}, t_{Sende_2}, ..., t_{Sende_i})$ eine zum ersten oder zweiten Referenzzeitsignal $(s_{REF1}, s_{REF2})$ referenzierte relative Zeitangabe ist.

9. Verfahren zur Zeitsynchronisierung nach einem der Ansprüche 1 bis 8,
**dadurch gekennzeichnet,**
**dass** zur Erzielung einer hohen Frequenzgenauigkeit der Datenrate des in der Zentrale (1) erzeugten Transportdatenstroms $(s_{Zen})$ im langen Zeithorizont die Datenrate des Transportdatenstroms $(s_{Zen})$ an die Referenzdatenrate geregelt wird.

10. System zur Zeitsynchronisierung zwischen einer Zentrale (1) und mehreren Sendern $(2_1, 2_2, ..., 2_i)$ insbesondere in einem Gleichwellen-Netz
mit einem ersten Referenzsignalgenerator (4) zur Erzeugung eines ersten Referenzzeitsignal $(s_{REF1})$ mit einer im kurzen und langen Zeithorizont hohen Zeit- und Frequenzgenauigkeit,
mit einem mit dem ersten Referenzsignalgenerator (4) verbundenen zweiten Referenzsignalgenerator (5) zur Erzeugung eines zweiten Referenzzeitsignals $(s_{REF2})$ mit einer im kurzen Zeithorizont geringen und im langen Zeithorizont hohen Zeit- und Frequenzgenauigkeit,
mit einer mit dem zweiten Referenzsignalgenerator (5) verbundenen Zentrale (1) zur Erzeugung eines mehreren Sendern $(2_1, 2_2, ..., 2_i)$ zugeführten Transportdatenstroms $(s_{Zen})$ mit einer der Frequenz des zweiten Referenzzeitsignals $(s_{REF2})$ entsprechenden Datenrate, wobei im Transportdatenstrom $(s_{Zen})$ Datenpakete mit zum zweiten Referenzzeitsignal $(s_{REF2})$ referenzierten Sendezeitpunkten $(t_{Sende_1}, t_{Sende_2}, ..., t_{Sende_i})$ bei den Sendern $(2_1, 2_2, ..., 2_i)$ verteilt sind, wobei die Zeitgenauigkeit der Sendezeitpunkte $(t_{Sende_1}, t_{Sende_2}, ..., t_{Sende_i})$ durch zeitliche Mittelung der Zeitgenauigkeit des zweiten Referenzzeitsignals $(s_{REF2})$ optimiert ist, und
mit mehreren Sendern $(2_1, 2_2, ..., 2_i)$ zum zeitliche Verschieben des von der Zentrale (1) empfangenen Transportdatenstroms $(s_{Zen})$ bis die jeweils einen Sendezeitpunkt $(t_{Sende_1}, t_{Sende_2}, ..., t_{Sende_i})$ beinhaltenden Datenpakete des Transportdatenstroms $(S_{ten})$ bezüglich des den Sendern $(2_1, 2_2, ..., 2_i)$ jeweils zugeführten ersten Referenzzeitsignals $(s_{REF1})$ zum korrekten Sendezeitpunkt $(t_{Sende_1}, t_{Sende_2}, ..., t_{Sende_i})$ gesendet werden.

## Claims

1. Method for synchronisation of a central station (1) and a plurality of transmitters $(2_1, 2_2, ..., 2_i)$, in particular in a single-frequency network, with the following steps:

    • generation or reception of a first reference time signal $(s_{REF1})$ having a high time and frequency accuracy in the short and long time horizon, and of a second reference time signal $(s_{REF2})$ supplied to the central station (1) and having a low time and frequency accuracy in the short time horizon and a high time and frequency accuracy in the long time horizon,
    • generation of a transport data stream $(s_{centr.})$ to be supplied to a plurality of transmitters $(2_1, 2_2, ..., 2_i)$ and having a time-variable data rate corresponding to the frequency of the second reference time signal $(s_{REF2})$ by the central station (1) with data packets (n(i)) distributed in the transport data stream $(s_{centr.})$ containing the transmission time $(t_{transm.1}, t_{transm.2}, ... , t_{transm.i})$ of the data packet (n(i)) to the transmitters $(2_1, 2_2, ..., 2_i)$ referenced to the first reference time signal $(s_{REF1})$, and with the time accuracy of the transmission time $(t_{transm.1}, t_{transm.2}, ..., t_{transm.i})$ of the respective data packet (n(i)) optimised by averaging the time and frequency accuracy of the second reference time signal $(s_{REF2})$ over time, and
    • time-displacement of the transport data stream $(s_{centr.})$ received from the central station (1) by the respective transmitter $(2_1, 2_2, ..., 2_i)$ until the data packets (n(i)) of the transport data stream $(s_{centr.})$ containing a transmission time $(t_{transm.1}, t_{transm.2}, ... , t_{transm.i})$ in each case are transmitted at the correct transmission time $(t_{transm.1}, t_{transm.2}, ... , t_{transm.i})$ with respect to the first reference time signal $(s_{REF1})$ supplied to the respective transmitter $(2_1, 2_2, ... , 2_i)$.

2. Method for synchronisation according to claim 1, **characterised in that** the averaging over time of the time and frequency accuracy of the second reference time signal $(s_{REF2})$ is effected by summation of the data packets (n(i)) transmitted so far and weighting with a reference data rate $(f_{REF})$ corresponding to the frequency of the first reference time signal $(s_{REF1})$.

3. Method for synchronisation according to claim 1, **characterised in that** the averaging over time of the time and frequency accuracy of the second reference time signal ($s_{REF2}$) is effected by averaging over time of the time-variable frequency ($f_{VAR}$) of the second reference time signal ($s_{REF2}$).

4. Method for synchronisation according to one of claims 1 to 3, **characterised in that** the time interval ($\Delta t$) between two successive transmission times ($t_{transm.1}$, $t_{transm.2}$, ..., $t_{transm.i}$) of data packets ($n(i)$) containing a transmission time ($t_{transm.1}$, $t_{transm.2}$, ..., $t_{transm.i}$) in each case is constant and the transport data stream ($s_{centr.}$) in the time interval ($n(i)$) contains a number of data packets dependent on the data rate present in the respective time interval ($n(i)$).

5. Method for synchronisation according to claim 4, **characterised in that** the data packets received in the respective transmitter ($2_1$, $2_2$, ..., $2_i$) before their transmission time ($t_{transm.1}$, $t_{transm.2}$, ... , $t_{transm.i}$) are stored temporarily in a buffer ($3_1$, $3_2$, ... , $3_i$) of the respective transmitter ($2_1$, $2_2$, ... , $2_i$) and thus time-displaced.

6. Method for synchronisation according to one of claims 1 to 3, **characterised in that** the time interval ($\Delta t_1$, $\Delta t_2$, ...) between two successive transmission times ($t_{transm.1}$, $t_{transm.2}$, ..., $t_{transm.i}$) of data packets containing a transmission time ($t_{transm.1}$, $t_{transm.2}$, ..., $t_{transm.i}$) in each case is variable in time and the transport data stream ($s_{centr.}$) in each time interval ($\Delta t_1$, $\Delta t_2$, ...) contains a constant number of data packets in each case.

7. Method for synchronisation according to one of claims 1 to 6, **characterised in that** the transmission time ($t_{transm.1}$, $t_{transm.2}$, ..., $t_{transm.i}$) is an absolute time datum referenced to the first or second reference time signal ($s_{REF1}$, $s_{REF2}$).

8. Method for synchronisation according to one of claims 1 to 7, **characterised in that** the transmission time ($t_{transm.1}$, $t_{transm.2}$, ..., $t_{transm.i}$) is a relative time datum referenced to the first or second reference time signal ($s_{REF1}$, $s_{REF2}$).

9. Method for synchronisation according to one of claims 1 to 8, **characterised in that** to obtain a high frequency accuracy of the data rate of the transport data stream ($s_{centr.}$) generated in the central station (1) in the long time horizon, the data rate of the transport data stream ($s_{centr.}$) is adjusted to the reference data rate.

10. System for synchronisation of a central station (1) and a plurality of transmitters ($2_1$, $2_2$, ...,$2_i$), in particular in a single-frequency network,
   with a first reference signal generator (4) for generation of a first reference time signal ($s_{REF1}$) having a high time and frequency accuracy in the short and long time horizon,
   with a second reference signal generator (5) connected to the first reference signal generator (4) for generation of a second reference time signal ($s_{REF2}$) having a low time and frequency accuracy in the short time horizon and a high time and frequency accuracy in the long time horizon,
   with a central station (1) connected to the second reference signal generator (5) for generation of a transport data stream ($s_{centr.}$) supplied to a plurality of transmitters ($2_1$, $2_2$, ...,$2_i$) and having a data rate corresponding to the frequency of the second reference time signal ($s_{REF2}$) wherein data packets with transmission times ($t_{transm.1}$, $t_{transm.2}$, ..., $t_{transm.i}$) referenced to the second reference time signal ($s_{REF2}$) are distributed in the transport data stream ($s_{centr.}$) to the transmitters ($2_1$, $2_2$, ..., $2_i$) and wherein the time accuracy of the transmission times ($t_{transm.1}$, $t_{transm.2}$, ..., $t_{transm.i}$) is optimised by averaging the time accuracy of the second reference time signal ($s_{REF2}$) over time, and with a plurality of transmitters ($2_1$, $2_2$, ..., $2_i$) for time-displacement of the transport data stream ($s_{centr.}$) received from the central station (1) until the data packets of the transport data stream ($s_{centr.}$) containing a transmission time ($t_{transm.1}$, $t_{transm.2}$, ..., $t_{transm.i}$) in each case are transmitted at the correct transmission time ($t_{transm.1}$, $t_{transm.2}$, ..., $t_{transm.i}$) with respect to the first reference time signal ($s_{REF1}$) supplied to the transmitters ($2_1$, $2_2$, ..., $2_i$) in each case.

**Revendications**

1. Procédé de synchronisation temporelle entre une station centrale (1) et plusieurs émetteurs ($2_1$, $2_2$,...,$2_i$) en particulier dans un réseau à fréquence unique, comportant les étapes de procédé suivantes :

   • la génération ou réception d'un premier signal temporel de référence ($s_{REF1}$) avec une précision de temps et de fréquence élevée dans un horizon temporel court et long et d'un second signal temporel de référence ($s_{REF2}$) délivré à la station centrale (1) avec une précision de temps et de fréquence élevée dans un horizon temporel long et faible dans un horizon temporel court,
   • la génération d'un flux de données de transport ($s_{Zen}$) délivré à plusieurs émetteurs ($2_1$, $2_2$,...,$2_i$) avec un débit de données variant dans le temps correspondant à la fréquence du second signal temporel de référence ($s_{REF2}$)

par la station centrale (1), où des paquets de données (n(i)) sont répartis dans le flux de données de transport ($s_{Zen}$), qui comportent le point de temps d'envoi ($t_{Sende_1}$,$t_{Sende_2}$,...,$t_{Sende_i}$) se rapportant au premier signal temporel de référence ($s_{REF2}$) du paquet de données (n(i)) dans les émetteurs ($2_1$, $2_2$,...,$2_i$), et où la précision temporelle du point de temps d'envoi ($t_{Sende_1}$,$t_{Sende_2}$,...,$t_{Sende_i}$) du paquet de données respectif (n(i)) est optimisée par la moyenne temporelle de la précision de temps et de fréquence du second signal de temps de référence ($s_{REF2}$), et

• le déplacement temporel du flux de données de transport ($s_{Zen}$) reçu par la station centrale (1) par l'intermédiaire de l'émetteur respectif ($2_1$, $2_2$,..., $2_i$), jusqu'à ce que les paquets de données (n(i)) comportant respectivement un point de temps d'envoi ($t_{Sende_1}$,$t_{Sende_2}$,...,$t_{Sende_i}$) du flux de transport de données se rapportant au premier signal de temps de référence ($s_{REF1}$) délivré à l'émetteur respectif ($2_1$, $2_2$,..., $2_i$) soient envoyés au point de temps d'envoi correct ($t_{Sende_1}$,$t_{Sende_2}$,...,$t_{Sende_i}$).

**2.** Procédé de synchronisation temporelle selon la revendication 1, **caractérisé en ce que**
la moyenne temporelle de la précision de temps et de fréquence du second signal de temps de référence ($s_{REF2}$) est effectuée par addition des paquets de données envoyés jusque-là (n(i)) et pondération avec un débit de données de référence ($f_{REF}$) correspondant à la fréquence du premier signal de temps de référence ($s_{REF1}$).

**3.** Procédé de synchronisation temporelle selon la revendication 1, **caractérisé en ce que**
la moyenne temporelle de la précision de temps et de fréquence du second signal de temps de référence ($s_{REF2}$) est effectuée grâce à la moyenne temporelle de la fréquence variant dans le temps ($f_{VAR}$) du second signal de temps de référence ($S_{REF2}$).

**4.** Procédé de synchronisation temporelle selon l'une des revendications 1 à 3, **caractérisé en ce que**
l'intervalle de temps ($\Delta t$) entre deux points de temps d'envoi consécutifs ($t_{Sende_1}$,$t_{Sende_2}$,...,$t_{Sende_i}$) de paquets de données (n(i)) comportant respectivement un point de temps d'envoi ($t_{Sende_1}$,$t_{Sende_2}$,...,$t_{Sende_i}$) est constant et le flux de données de transport ($s_{Zen}$) dans l'intervalle de temps (n(i)) contient un nombre de paquets de données dépendant du débit de données existant dans l'intervalle de temps respectif (n(i)).

**5.** Procédé de synchronisation temporelle selon la revendication 4, **caractérisé en ce que**
les paquets de données reçus dans l'émetteur respectif ($2_1$, $2_2$,..., $2_i$) avant leur point de temps d'envoi sont mis en mémoire tampon dans une mémoire tampon ($3_1$, $3_2$,..., $3_i$) de l'émetteur respectif et ainsi sont décalés temporellement.

**6.** Procédé de synchronisation temporelle selon l'une des revendications 1 à 3, **caractérisé en ce que**
l'intervalle de temps ($\Delta t_1$, $\Delta t_2$, ...) entre deux points de temps d'envoi consécutifs ($t_{Sende_1}$,$t_{Sende_2}$,...,$t_{Sende_i}$) de paquets de données contenant respectivement un point de temps d'envoi ($t_{Sende_1}$,$t_{Sende_2}$,...,$t_{Sende_i}$) varie dans le temps et le flux de données de transport ($s_{Zen}$) contient respectivement un nombre constant de paquets de données dans chaque intervalle de temps ($\Delta t_1$, $\Delta t_2$, ...).

**7.** Procédé de synchronisation temporelle selon l'une des revendications 1 à 6, **caractérisé en ce que**
le point de temps d'envoi ($t_{Sende_1}$,$t_{Sende_2}$,...,$t_{Sende_i}$) est une indication temporelle absolue se rapportant au premier ou au second signal de temps de référence ($s_{REF1}$, $S_{REF2}$).

**8.** Procédé de synchronisation temporelle selon l'une des revendications 1 à 7, **caractérisé en ce que**
le point de temps d'envoi ($t_{Sende_1}$,$t_{Sende_2}$,...,$t_{Sende_i}$) est une indication temporelle relative se rapportant au premier ou au second signal de temps de référence ($s_{REF1}$, $s_{REF2}$).

**9.** Procédé de synchronisation temporelle selon l'une des revendications 1 à 8, **caractérisé en ce que**
pour obtenir une précision de fréquence élevée du débit de données du flux de données de transport ($s_{Zen}$) généré dans la station centrale (1) dans l'horizon temporel long, le débit de données du flux de données de transport ($s_{Zen}$) est réglé sur le débit de données de référence.

**10.** Système de synchronisation temporelle entre une station centrale (1) et plusieurs émetteurs ($2_1$, $2_2$,..., $2_i$) en particulier dans un réseau à fréquence unique
comportant un premier générateur de signal de référence (4) pour générer un premier signal de temps de référence ($s_{REF1}$) avec une précision de temps et de fréquence élevée dans l'horizon temporel court et le long,
comportant un second générateur de signal de référence (5) relié au premier générateur de signal de référence (4) pour générer un second signal de temps de référence ($s_{REF2}$) avec une faible précision de temps et de fréquence dans l'horizon temporel court et élevée dans l'horizon temporel long,

comportant une station centrale (1) reliée au second générateur de signal de référence (5) pour générer un flux de données de transport ($s_{Zen}$) délivré à plusieurs émetteurs ($2_1$, $2_2$, ..., $2_i$) avec un débit de données correspondant à la fréquence du second signal de temps de référence ($s_{REF2}$), où, dans le flux de données de transport ($s_{Zen}$), des paquets de données avec des points de temps d'envoi ($t_{Sende_1}$, $t_{Sende_2}$,..., $t_{Sende_i}$) se rapportant au second signal de temps de référence ($s_{REF2}$) sont répartis dans les émetteurs ($2_1$, $2_2$,..., $2_i$),

où la précision de temps des points de temps d'envoi ($t_{Sende_1}$, $t_{Sende_2}$,..., $t_{Sende_i}$) est optimisée par moyenne temporelle de la précision temporelle du second signal de temps de référence ($s_{REF2}$), et

comportant des émetteurs ($2_1$, $2_2$,..., $2_i$), en vue du déplacement temporel du flux de données de transport ($s_{Zen}$) reçu par la station centrale (1), jusqu'à ce que les paquets de données du flux de données de transport ($S_{ten}$) comportant un point de temps d'envoi respectif ($t_{Sende_1}$, $t_{Sende_2}$,..., $t_{Sende_i}$) se rapportant au premier signal de temps de référence ($s_{REF1}$) délivrés respectivement aux émetteurs ($2_1$, $2_2$,..., $2_i$) sont envoyés au point de temps d'envoi ($t_{Sende_1}$, $t_{Sende_2}$,..., $t_{Sende_i}$) correct.

Fig. 1

Fig. 2

Fig. 3

Fig. 4A

Fig. 4B

64 Bit

MIP/VFIP:

| | STS | max. verzö- gerung | |
|---|---|---|---|

MIP Generation  $t_{sende_1}$

MIP Generation  $t_{sende_2}$

MIP Generation  $t_{sende_3}$

1PPS:

STS   max. verzö- gerung

STS   max. verzö- gerung

STS   max. verzö- gerung

## Fig. 5A

64 Bit

MIP/VFIP:

| | Sekun- den | Sekun- den- Bruchteil | |
|---|---|---|---|

Sekunden:   889.056.010          889.056.011          889.056.012          889.056.013

$t_{sende_1}$          $t_{sende_2}$          $t_{sende_3}$

1PPS:

Sekunden- Bruchteil          Sekunden- Bruchteil          Sekunden- Bruchteil

## Fig. 5B

```
                        ┌──────────┐
                        │  Start   │
                        └────┬─────┘
                             │
                             ▼
   ┌──────────────────────────────────────────────────────┐
   │ Erzeugen eines ersten Referenzzeitsignals mit hoher   │
   │ Zeitgenauigkeit im Kurzen und Langen Zeithorizont und │
   │ eines zweiten Referenzzeitsignals mit niedriger       │─── S10
   │ Zeitgenauigkeit im Kurzen Zeithorizont und hoher      │
   │ Zeitgenauigkeit im Langen Zeithorizont                │
   └──────────────────────────┬───────────────────────────┘
                              │
                              ▼
   ┌──────────────────────────────────────────────────────┐
   │ Erzeugen und Senden eines Transportdatenstroms mit    │
   │ verstreuten Datenpaketen, die den Sendezeitpunkt des  │─── S20
   │ jeweiligen Datenpakets enthalten, durch Zentrale      │
   └──────────────────────────┬───────────────────────────┘
                              │
                              ▼
   ┌──────────────────────────────────────────────────────┐
   │ Empfangen des Transportdatenstroms durch jeden Sender │
   │ und zeitliches verschieben des Transportdatenstroms,  │
   │ bis die einzelnen einen Sendezeitpunkt beinhaltenden  │─── S30
   │ Datenpakete zum korrekten Sendezeitpunkt abgestrahlt  │
   │ werden können                                          │
   └──────────────────────────┬───────────────────────────┘
                              │
                              ▼
                        ┌──────────┐
                        │   Ende   │
                        └──────────┘
```

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006046107 A1